Europäisches Patentamt

European Patent Office

Office européen des brevets

(19)

(11) Numéro de publication: **0 381 905**
**A1**

# (12) DEMANDE DE BREVET EUROPEEN

(21) Numéro de dépôt: **89403413.1**

(22) Date de dépôt: **08.12.89**

(51) Int. Cl.5: **C08G 12/12, D06M 15/423**

(30) Priorité: **10.01.89 FR 8900214**

(43) Date de publication de la demande:
**16.08.90 Bulletin 90/33**

(84) Etats contractants désignés:
**BE CH DE ES FR GB IT LI NL**

(71) Demandeur: **SOCIETE FRANCAISE HOECHST**
**TOUR ROUSSEL HOECHST 1 Terrasse Bellini**
**F-92800 Puteaux(FR)**

(72) Inventeur: **Wilhelm, Didier**
**26 rue Diderot**
**F-92130 Issy Les Moulineaux(FR)**
Inventeur: **Loison, Sylvie**
**6 rue Enesco**
**F-92000 Nanterre(FR)**
Inventeur: **Blanc, Alain**
**21bis rue Galvanis**
**F-75017 Paris(FR)**

(74) Mandataire: **Rinuy, Santarelli**
**14, avenue de la Grande Armée**
**F-75017 Paris(FR)**

(54) **Résines aminoplastes destinées à l'ennoblissement des fibres cellulosiques et leur application.**

(57) Résines aminoplastes solubles dans l'eau dont le dérivé azoté est choisi dans le groupe constitué par l'urée, la diméthyl-1,3-urée, l'éthylèneurée, la dihydroxy-4,5-éthylèneurée ou leurs mélanges et le dérivé aldéhydique est un mélange de 1 à 99 % en poids de glyoxal et de 99 à 1 % en poids d'un monoacétal du glyoxal de formule $(RO)_2CH-CHO$ ; R = alk en $C_1$-$C_4$, leurs éthers et leurs applications notamment avec traitement des fibres cellulosiques.

EP 0 381 905 A1

## Nouvelles résines aminoplastes destinées à l'ennoblissement des fibres cellulosiques et leur application.

La presente invention concerne de nouvelles resines aminoplastes destinées à l'ennoblissement des fibres cellulosiques et leur application.

Les résines aminoplastes sont les résines obtenues par la condensation entre un aldéhyde et une amine.

Les résines aminoplastes solubles dans l'eau dans lesquelles le dérivé azoté est une urée linéaire ou cyclique telle que l'urée, la diméthyl-1,3-urée, l'éthyléneurée, la dihydroxy-4,5 éthyléneurée et le dérivé aldéhydique est le formaldéhyde, le glyoxal, un monoacétal du glyoxal ou un mélange de glyoxal et de formaldéhyde, sont utilisées dans l'ennoblissement des fibres cellulosiques.

Quoique ces résines aminoplastes connues présentent d'intéressantes propriétés applicatives pour conférer par exemple aux tissus cellulosiques de l'infroissabilité, elles ne répondent toutefois pas entièrement à la demande du marché soit pour des raisons économiques, soit à cause de la libération de formaldéhyde libre lors de leurs utilisations.

Or la Demanderesse a découvert de nouvelles résines aminoplastes, solubles dans l'eau, destinées notamment à l'ennoblissement des fibres cellulosiques, obviant à ces inconvénients tout en présentant de bonnes propriétés applicatives d'infroissabilité.

Les résines aminoplastes solubles dans l'eau selon la présente invention sont caractérisées en ce que le derivé azoté est choisi dans le groupe constitué par l'urée, la diméthyl-1,3-urée, l'éthyléneurée, la dihydroxy-4,5 éthyléneurée ou leurs mélanges et que le dérivé aldéhydique est un mélange de 1 à 99 % en poids de glyoxal et de 99 à 1 % en poids d'un monoacétal du glyoxal de formule générale (I), $(RO)_2$ CH-CHO, dans laquelle R représente un groupement alkyle primaire ou secondaire en $C_1$-$C_4$, ainsi que leurs dérivés éthérifiés avec un alcanol en $C_1$-$C_4$.

Par dérivés éthérifiés, l'on entend les produits d'éthérification des résines aminoplastes obtenues par condensation entre le dérivé azoté et le dérivé aldéhydique.

L'expression groupement alkyle primaire ou secondaire en $C_1$-$C_4$ désigne un groupement propyle, isopropyle, isobutyle ou sec-butyle, et de préférence un radical éthyle, n-butyle ou méthyle, notamment ce dernier.

L'expression alcanol en $C_1$-$C_4$ désigne l'éthanol, le propanol, l'alcool isopropylique, l'alcool isobutylique ou l'alcool sec-butylique, et de préférence le méthanol ou le butanol.

L'invention a plus particulièrement pour objet les résines, telles que définies ci-dessus, caractérisées en ce que le rapport molaire monoacétal du glyoxal désigné MA, sur glyoxal désigné G, MA/G est compris entre 1,5 et 3,5. Des résines préférées selon l'invention sont les résines dans lesquelles le monoacétal du glyoxal est le diméthoxyéthanal, ci-après désigné DME. Avantageusement, la présente invention a pour objet les résines telles que définies ci-dessus, caractérisées en ce que le rapport molaire dérivé azoté, désigné U, sur glyoxal, U/G, est comprise entre 1 et 2,7 et parmi celles-ci, celles dont le dérivé azoté est uniquement l'éthyléneurée, désignée EU, avec un rapport molaire, EU/G, compris entre 1 et 2,7.

Les monoacétals du glyoxal de formule générale (I) sont des produits connus et ils peuvent être obtenus aisément par exemple selon le procédé décrit dans la demande de brevet européen N° 0.249.530.

Les résines aminoplastes selon la présente invention peuvent être préparées par tout mode opératoire approprié et avantageux. Généralement, le ou les dérivés azotés et les dérivés aldéhydiques choisis sont mis à réagir en solution aqueuse, à une concentration pondé rale comprise avantageusement entre 30 % et 70 %, dans un intervalle de température compris entre la température ambiante et la température d'ébullition du milieu réactionnel, de préférence entre 40 et 70° C, à un pH compris entre 1,5 et 8, de préférence entre 3,5 et 7, jusqu'à disparition quasi-totale des dérivés aldéhydiques mis en oeuvre, ce qui demande, selon les conditions opératoires, de 1 à 20 heures. La disparition des dérivés aldéhydiques dans le milieu réactionnel peut être suivie, si désiré, par exemple par l'analyse de prises d'essai prélevées régulièrement dans ce milieu, d'une part par dosage chimique à l'aide de la réaction de Cannizzaro, d'autre part par dosage par chromatographie en phase liquide à hautes performances. Dans le cas où l'on désire obtenir une résine éthérifiée avec un alcanol en $C_1$-$C_4$, le produit de condensation du ou des dérivés azotés choisis avec le mélange de dérivés aldéhydiques est mis à réagir, de préférence à un pH compris entre 1 et 5 à une température comprise entre la température ambiante et la température d'ébullition du milieu réactionnel, avec un excès de l'alcanol en $C_1$-$C_4$ sélectionné dont on élimine l'excès d'alcanol par des moyens connus en soi.

Les résines selon la présente invention présentent d'intéressantes propriétés applicatives dans l'ennoblissement des fibres cellulosiques, notamment pour leur conférer de l'infroissabilité. Elles conviennent pour

2

EP 0 381 905 A1

les tissus cellulosiques, tissés ou non tissés, comprenant 100 % de produit cellulosique comme par exemple coton, rayonne et lin, aussi bien que pour des mélanges, par exemple polyester-coton ou polyester-rayonne. De tels mélanges renferment de préférence, mais non obligatoirement, au moins 20 % de cellulose. On peut traiter efficacement, avec les résines selon l'invention, aussi bien le blanc que les couleurs (impression, teintures, teinture à l'état de fil, "cross-dyed" et similaires). On peut également traiter des substances contenant des fibres à groupements hydroxyle libres.

L'application des résines selon l'invention à la substance à traiter s'opère généralement en présence d'un catalyseur convenable, conviennent notamment des acides tels que acide chlorhydrique, sulfurique, fluoroborique, acétique, glycolique, maléique, lactique, citrique, tartrique et oxalique ; des sels métalliques comme chlorure, nitrate, fluoroborate ou fluorosilicate de magnésium ou de zinc, chlorure d'ammonium, oxychlorure de zirconium, bisulfate de sodium ou de potassium, phosphite ou hydrophosphite de sodium ou de potassium ; des chlorhydrates d'amine, comme le chlorhydrate d'amino-2 méthyl-2 propanol et des produits similaires, ainsi que leurs mélanges.

La quantité de catalyseur mis en oeuvre représente en général entre 0,01 et 10 %, de préférence entre 0,05 et 5 % du poids du bain d'imprégnation.

Les résines selon l'invention·peuvent être appliquées à la matière textile par tout procédé connu et approprié, par exemple par immersion ou imprégnation, en général à l'aide d'une solution aqueuse ou d'une solution alcoolique. Le solvant peut dont être de l'eau, un alcool aliphatique comme le méthanol, l'éthanol ou l'isopropanol, ou un mélange d'eau et d'alcool aliphatique. On peut incorporer en quantités appropriées, dans ces bains de traitement, des additifs classiques comme lubrifiants, plastifiants, agents donnant du corps, produits hydrofuges, retardateurs de flamme, agents anti-salissure, inhibiteurs de moisissures, agents anti-salissure humide, agents de coloration fluorescente et similaires. Toutefois, ces produits auxiliaires ne doivent pas interférer avec le fonctionnement propre de la résine selon l'invention, ne doivent pas exercer eux-mêmes un effet nocif sur la matière à traiter et il est souhaitable qu'ils soient exempts de formaldéhyde.

La quantité de résine à appliquer sur la substance textile dépend du type de cette substance et du but poursuivi. Généralement, elle est de l'ordre de 0,5 à 10 %, de préférence compise entre 2 et 5 %, rapporté au poids de textile.

Au cours du procédé de traitement des textiles avec les résines selon l'invention, le textile est imprégné avec une solution aqueuse ou alcoolique de la résine selon l'invention, puis le textile ainsi imprégné est séché et la résine est polymérisée. Les stades de séchage et de polymérisation peuvent être consécutifs ou simultanés. Eventuellement, la substance textile peut être finie par post-polymérisation (également dénommée polymérisation différée ou à retardement). Ce procédé consiste à imprégner le textile avec une solution de résine selon l'invention et de catalyseur, à sécher soigneusement la substance imprégnée de façon à ce que la résine ne réagisse pas, puis, après un intervalle prolongé, à chauffer la substance à une température à laquelle la résine se polymérise sous l'influence du catalyseur.

Les exemples suivants sont donnés à titre illustratif ; ils permettent de mieux comprendre l'invention mais ils n'en limitent pas la portée. Sauf indications contraires, les parties et pourcentages sont donnés en poids.

Exemple 1

Préparation d'un mélange glyoxal - diméthoxyéthanal

On dissout par un léger chauffage, 829 g d'une solution aqueuse de glyoxal à 70 % en poids environ, soit 10 moles, dans 3204 g (100 moles) de méthanol puis cette solution, acidifiée avec 129 g d'acide sulfurique à 96 %, soit 1,26 mole, est chauffée au reflux. La réaction d'acétalisation est suivie par dosage du glyoxal non transformé à l'aide de la réaction de Cannizzaro sur une prise d'essai prélevée régulièrement dans le milieu réactionnel. Lorsque 80 % du glyoxal engagé a été consommé, on refroidit le milieu réactionnel à la température ambiante puis, à cette température, on le neutra lise à pH = 6,8 environ avec environ 230 g (2,74 moles) d'hydrogénocarbonate de sodium et ensuite on élimine les sels minéraux insolubles par filtration et le méthanol non transformé par distillation sous vide.

L'huile résiduelle obtenue est reprise avec environ 0,7 volume d'eau, soit 1500 g, puis la solution aqueuse obtenue est concentrée sous vide (200 mbar) jusqu'à élimination quasi-totale du méthanol non transformé.

On obtient ainsi 1800 g d'une solution aqueuse contenant pondéralement environ :

3

- 43,5 % de diméthoxyéthanal, soit 7,53 moles,
- 2 % de tétraméthoxy-1,1,2,2 éthane, soit 0,24 mole,
- 6,9 % de glyoxal, soit 2, 14 moles,
- 1,3 % de méthanol,
- 45 % d'eau.

Le glyoxal a été dosé par la méthode classique de Cannizzaro et les autres titres ont été déterminés par chromatographie gazeuse sur un chromatographe équipé d'une colonne de longeur. 3 m et de diamètre 3,17 mm garnie de Chromosorb 101, à une pression initiale de 165 kPa et à une température initiale de 110°C. La température finale est de 275°C avec un gradient de montée en température de 10°C/minute. L'étalon interne utilisé est l'acétonitrile (temps de rétention 7 min) et les temps de rétention du diméthoxyéthanal et du tétraméthoxy-1,1,2,2 éthane sont respectivement de 14 minutes et de 19 minutes.

Exemples 2-4

Préparation des résines textiles

Dans 240 g de la solution aqueuse brute de diméthoxyéthanal préparée à l'exemple 1, contenant environ 1 mole de diméthoxyéthanal et 285 mmoles de glyoxal, on introduit x mole d'une urée A et y mole d'une urée B, puis on ajuste le pH du milieu réactionnel à la valeur H.

Le milieu réactionnel est ensuite chauffé à 60 ± 5°C, jusqu'à des taux de glyoxal libre et de diméthoxyéthanal libre inférieurs à 2 % en poids, ce qui demande environ 2 heures de chauffage. Le milieu réactionnel est ensuite refroidi à la température ambiante.

On obtient ainsi des résines aminoplastes selon l'invention dont les paramètres de préparation sont donnés dans le tableau I et les propriétés applicatives sont données dans le tableau II.

Tableau 1

| Exemple | x | A | y | B | H | U/G |
|---|---|---|---|---|---|---|
| 2 | 0,285 | urée | 0,215 | éthylèneurée | 6,5 | 1,75 |
| 3 | 0,5 | urée | 0 | | 6 | 1,75 |
| 4 | 0,285 | diméthyl-1,3 urée | 0,5 | éthylèneurée | 5,8 | 1,75 |

Exemple 5

On prépare une solution S en mélangeant sous agitation à la température ambiante :
- 46 g d'une solution aqueuse de glyoxal à 70% en poids environ soit 0,555 mole,
- 134 g d'une solution de diméthoxyéthanal à 78% en poids environ, soit 1 mole,
- 91 g (1,06 mole) d'éthylèneurée.

Cette solution est ensuite amenée à pH = 3,5 puis elle est chauffée à 60°C jusqu'à un taux de glyoxal libre inférieur à 2 % en poids, ce que demande deux heures. On obtient ainsi 271 g de résine selon l'invention dont les propriétés applicatives sont données dans le tableau II.

Exemple 6

On prépare selon l'exemple 5 une solution S puis cette solution est amenée à pH = 6,8. Elle est ensuite chauffée à 60°C jusqu'à un taux pondéral de glyoxal libre inférieur à 2 %, ce qui demande environ 2 heures. On obtient ainsi 271 g de résine dont les propriétés applicatives sont données dans le tableau II.

Exemple 7

On imprègne au foulard un tissu de popeline 100 % coton, débouilli et blanchi, d'un poids d'environ 130 g par mètre carré, avec un taux d'exprimage de 75 % dans un bain aqueux contenant en solution :
- quantité suffisante de résine selon la présente invention, de manière à obtenir un taux d'azote combiné de 9,14 g par litre,
- 12 g par litre de chlorure de magnésium hexahydraté,
- 2,1 g par litre d'acide acétique,
- 2 g par litre de nonylphénol éthoxylé avec 10 moles d'oxyde d'éthylène.

Le tissu est ensuite séché à 120°C puis il est soumis sur une rame de laboratoire à un traitement thermique de 1 minute à 140°C.

On détermine ensuite sur des échantillons du tissu traité :
- la défroissabilité selon la méthode AATCC N° 66-1973 sur des échantillons tels quels et sur des échantillons soumis à trois lavages ménagers à 60°C ; la défroissabilité est exprimée par la somme des angles de défroissement obtenus en sens chaîne et en sens trame ;
- la résistance à la traction Rt, exprimé en daN, en sens chaîne plus en sens trame, selon la norme AFNOR G 07 001.

Les résultats sont donnés dans le tableau II.

Tableau II

| | | Angles de défroissement sur tissu | | Rt |
|---|---|---|---|---|
| | | tel que | après 3 lavages | |
| | sur tissu non traité | 191 | 172 | 93,6 |
| 2 | sur tissu traité avec la résine décrite dans l'exemple 2 | 252 | 230 | 66 |
| 3 | sur tissu traité avec la résine décrite dans l'exemple 3 | 224 | 186 | 70 |
| 4 | sur tissu traité avec la résine décrite dans l'exemple 4 | 238 | 222 | 69 |
| 5 | sur tissu traité avec la résine décrite dans l'exemple 5 | 213 | 203 | 75,5 |
| 6 | sur tissu traité avec la résine décrite dans l'exemple 6 | 244 | 212 | 70,2 |

On constate que les résines de la présente invention améliorent considérablement les qualités d'infroissabilité des tissus traités même après lavage, sans pour autant abaisser trop nettement leur résistance.

## Revendications

1. Résines aminoplastes solubles dans l'eau, caractérisées en ce que le dérivé azoté est choisi dans le groupe constitué par l'urée, la diméthyl-1,3-urée, l'éthylèneurée, la dihydroxy-4,5-éthylèneurée ou leurs mélanges et en ce que le dérivé aldéhydique est un mélange de 1 à 99 % en poids de glyoxal et de 99 à 1 % en poids d'un monoacétal du glyoxal de formule générale (I),

$(RO)_2$ CH-CHO     (I)

dans laquelle R représente un groupement alkyle primaire ou secondaire en $C_1$-$C_4$, ainsi que, si désiré, leurs dérivés éthérifiés avec un alcanol en $C_1$-$C_4$.

2. Résines selon la revendication 1, caractérisées en ce que le rapport molaire monoacétal du glyoxal sur glyoxal est compris entre 1,5 et 3,5.

3. Résines selon l'une quelconque des revendications 1 et 2, caractérisées en ce que le monoacétal du glyoxal est le diméthoxyéthanal.

4. Résines selon l'une quelconque des revendications 1 à 3, caractérisées en ce que le rapport molaire dérivé azoté sur glyoxal est compris entre 1 et 2,7.

5. Résines selon la revendication 4, caractérisées en ce que le dérivé azoté est l'éthylèneurée.

6. Application à titre de produits d'ennoblissement des fibres cellulosiques, des résines telles que définies à la revendication 1.

7. Application à titre de produits d'ennoblissement des fibres cellulosiques, des résines telles que définies à la revendication 2.

8. Application à titre de produits d'ennoblissement des fibres cellulosiques, des résines telles que définies à la revendication 3.

9. Application à titre de produits d'ennoblissement des fibres cellulosiques, des résines telles que définies à l'une des revendications 4 et 5.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 120 308 (DIAMOND SHAMROCK CHEMICALS COMPANY) * revendication 1; page 2, lignes 30,31; page 4, exemple 1 * --- | 1 | C 08 G 12/12 D 06 M 15/423 |
| A,D | EP-A-0 249 530 (SOCIETE FRANCAISE HOECHST) * revendications 1,6 * --- | 3 | |
| A | EP-A-0 002 793 (BASF AG) * revendications 1,2,5; page 4, lignes 19-34 * --- | 1 | |
| A | FR-A-2 164 919 (BADISCHE ANILIN- & SODA-FABRIK AG) * revendication 1; page 1, ligne 39 - page 2, ligne 1; pages 4,5, exemple 1 * --- | 1,6-9 | |
| A | US-A-4 198 462 (C.M. DIXON et al.) * revendications 1,2; colonne 3, exemple 1 * --- | 1,6-9 | DOMAINES TECHNIQUES RECHERCHES (Int. Cl.5) |
| A | DE-B-2 616 983 (HOECHST AG) * colonne 2, lignes 53,54; colonne 6, lignes 16-18 * --- | 1,5 | C 08 G D 06 M |
| A | DATABASE WPI 1977, abrégé no. 77-78810y, Derwent Publications Ltd. London, GB; "Resin coating cellulose fibres - using reaction prod. of urea and glyoxal which is heated after coating" & JP - B - 77 039 958 (DAINIPPON INK CHEM K.K.) 07.10.1977 * le document en entier * ----- | 1,6-9 | |

Le présent rapport a été établi pour toutes les revendications

| Lieu de la recherche | Date d'achèvement de la recherche | Examinateur |
|---|---|---|
| BERLIN | 02-04-1990 | VOIGTLAENDER R O J |